(19) Europäisches Patentamt / European Patent Office / Office européen des brevets

(11) **EP 4 687 031 A1**

(12) **EUROPEAN PATENT APPLICATION**

(43) Date of publication:
04.02.2026 Bulletin 2026/06

(21) Application number: 25191976.7

(22) Date of filing: 25.07.2025

(51) International Patent Classification (IPC):
*G06F 8/65* (2018.01)

(52) Cooperative Patent Classification (CPC):
G06F 8/65; G06N 20/00; B60K 35/22; B60K 35/28

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.07.2024 IN 202441057956**

(71) Applicant: **Harman International Industries, Incorporated**
**Stamford, CT 06901 (US)**

(72) Inventor: **ANNEGOWDA, Amruth**
**560049 Bengaluru (IN)**

(74) Representative: **Rummler, Felix**
**Maucher Jenkins**
**Liebigstraße 39**
**80538 München (DE)**

(54) **METHODS AND SYSTEMS FOR INFOTAINMENT SYSTEM SOFTWARE UPDATES**

(57)     Systems and methods are herein provided for generating a custom software update package for a specific infotainment system of a specific vehicle. In one example, data may be obtained from one or more software components of the specific infotainment system. One or more feature vectors may be determined based on the data. One or more of the software components may be determined to demand software update based on the one or more feature vectors, and the custom software update package may be based on the one or more software components determined to demand software update.

FIG. 1

**Description**

CROSS REFERENCE TO RELATED APPLICATIONS

The present application claims priority to Indian Patent Application No. 202441057956, entitled "METHODS AND SYSTEMS FOR INFOTAINMENT SYSTEM SOFTWARE UPDATES" and filed on July 31, 2024. The entire contents of the above-listed application is incorporated by reference for all purposes.

FIELD

The disclosure relates to vehicle software updates, and more particularly to generating vehicle infotainment system customized software update packages.

BACKGROUND

Electronic control units (ECUs), for example of electric vehicles, hybrid electric vehicles, or gasoline powered vehicles, are responsible for managing and controlling various aspects of the vehicle's operation. The ECUs in an electric vehicle comprise several subsystems configured for specific functions, including an infotainment system comprising a plurality of applications, system components, and the like. The infotainment system comprises software therein that may be disposed to frequent updates to ensure optimal performance and user satisfaction. Specifically, vehicle infotainment systems integrate various applications to provide entertainment, navigation, and connectivity services. These applications may be disposed to regular updates to maintain functionality and security. Traditional update mechanisms are often inefficient, leading to large data transfers and extended system downtime.

SUMMARY

In one or more embodiments, a method for generating customized software update packages for a specific infotainment system. The method may obtain data from one or more system components of the specific infotainment system. The one or more software components may include, e.g., applications, software programs, and/or system components. The method may determine one or more feature vectors based on the data, and may determine with a subset of the one or more software components that are to be updated based on the one or more feature vectors. The method may generate the custom software update package for the specific infotainment system based on the subset of the one or more software components that are to be updated.

In this way, the custom software update may comprise software updates for a subset of software components, such as applications or programming components of the infotainment system according to the specific usage and predispositions of the system. Thus, the overall amount of data that is to be obtained within the update package and installed onto the infotainment system software may be reduced, thereby reducing the time it takes to install the software updates and increasing installation and system efficiency.

It should be understood that the brief description above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

BRIEF DESCRIPTION OF THE DRAWINGS

The disclosure may be better understood from reading the following description of non-limiting embodiments, with reference to the attached drawings, wherein below:

FIG. 1 shows an exemplary infotainment system software update system, in accordance with one or more embodiments of the present disclosure;

FIG. 2 shows an example partial view of a vehicle cabin including an instrument panel, in accordance with one or more embodiments of the present disclosure;

FIG. 3 shows a block diagram of an example in-vehicle computing system of a vehicle configured to receive software updates from a charging station, in accordance with one or more embodiments of the present disclosure;

FIG. 4 shows a method for generating an infotainment system software update package, in accordance with one or more embodiments of the present disclosure;

FIG. 5 shows a method of a vehicle for installing an infotainment system software update package, in accordance with one or more embodiments of the present disclosure;

FIG. 6 shows a graph of usages of various applications, in accordance with one or more embodiments of the present disclosure;

FIG. 7A shows an example feature vector for an application, in accordance with one or more embodiments of the present disclosure; and

FIG. 7B shows an example K-means clustering plot for the example feature vector of FIG. 7A, in accordance with one or more embodiments of the present disclosure.

DETAILED DESCRIPTION

The following description relates to systems and methods for generating a custom software update package for an infotainment system of a vehicle. In some examples, a vehicle computing system comprising an infotainment software system may include or otherwise be coupled to an infotainment analytics system configured to obtain and process data obtained from one or more software components of the infotainment system. From the obtained data, a custom software update package may be generated, for example using a machine learning algorithm. In this way, the custom software update package may include delta updates that are customized based on usage data and benefits for update of the software components of the infotainment system. By customizing the update package to include updates particular to the infotainment system and avoiding updates deemed unnecessary for the infotainment system, the amount of data transfer that is to be installed may be reduced, thereby reducing overall processing demands for the vehicle computing system.

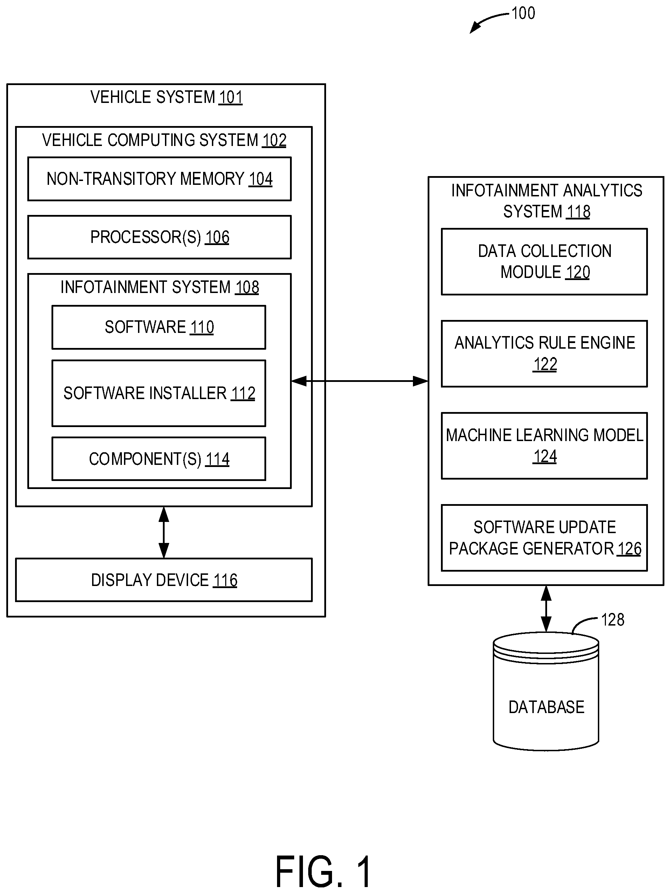

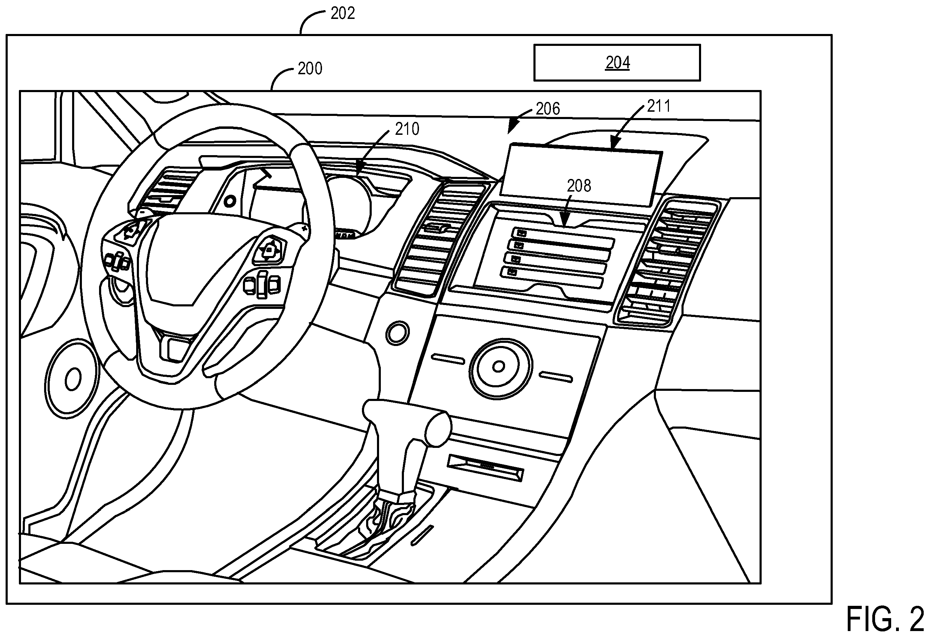

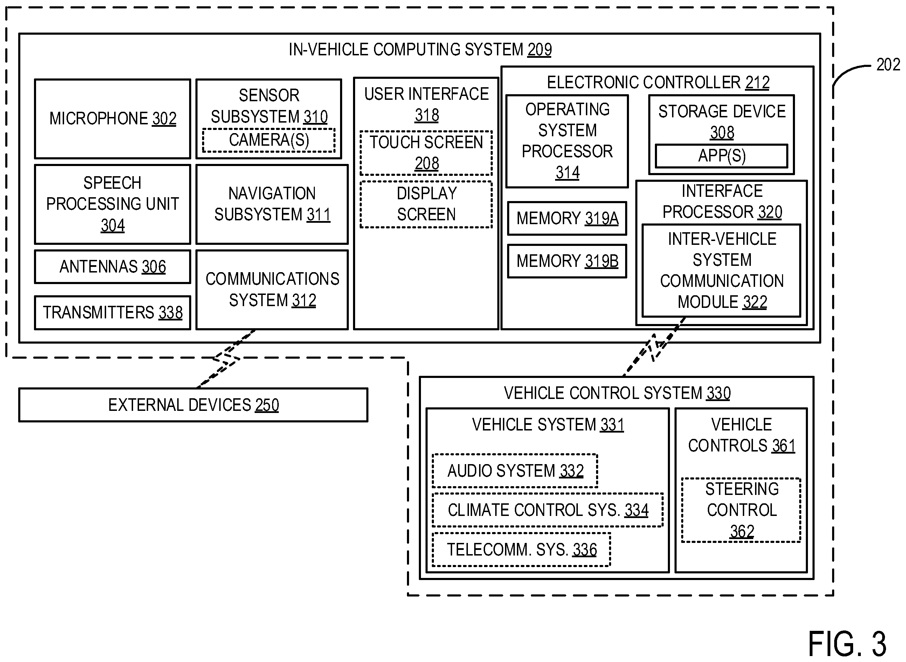

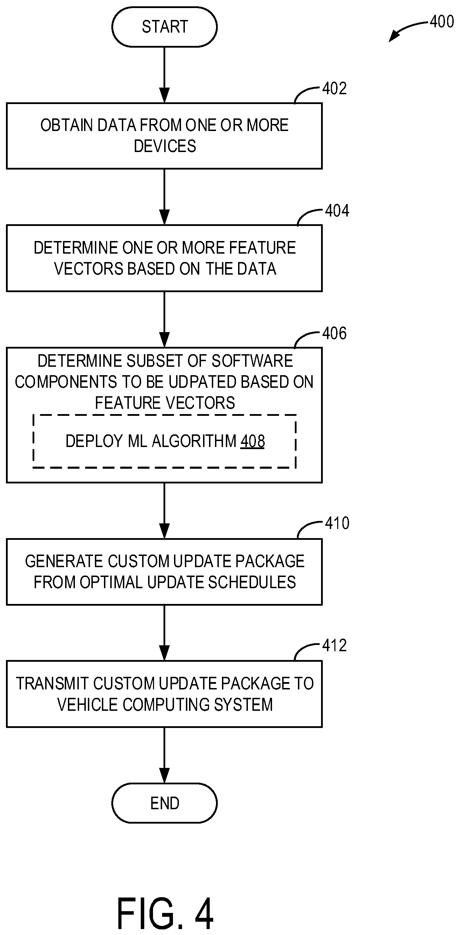

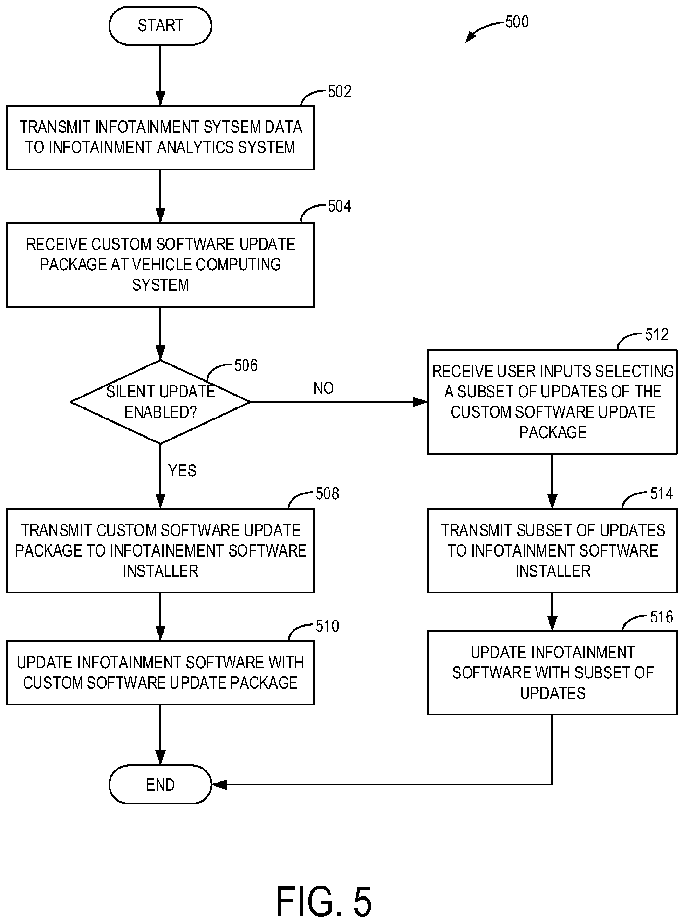

FIG. 1 shows an exemplary infotainment system software update system that includes the vehicle with the infotainment system and the infotainment analytics system. FIG. 2 shows an example partial view of a vehicle cabin including an instrument panel. FIG. 3 shows an example in-vehicle computing system of a vehicle configured to receive customized infotainment system software update package. FIG. 4 shows a flowchart illustrating a method for generating a custom infotainment system software update package. FIG. 5 shows a flowchart illustrating a method for installing a custom infotainment system software update package is shown.

FIG. 1 shows an infotainment system software update system 100, including a vehicle computing system 102 of a vehicle system 101. The vehicle system 101 may be a battery electric vehicle (BEV), a hybrid electric vehicle (HEV), a plug-in hybrid electric vehicle (PHEV), a gasoline powered vehicle, a hydrogen powered vehicle, or other type of vehicle. The vehicle system 101 may be a car, a bus, a truck, or a different type of machinery or vehicle operated by an operator. Further, it should be understood that while the systems and methods herein disclosed are described with respect to infotainment systems of vehicles, the systems and methods may apply to other infotainment systems or systems with applications, such as mobile devices, tablets, laptops, exercise equipment, smart watches, household appliances (e.g., smart refrigerators), and the like, without departing from the scope of this disclosure.

Vehicle computing system 102 includes one or more processors 106 configured to execute machine readable instructions stored in non-transitory memory 104. Memory 104 and other memory referred to herein may include one or more data storage structures, such as optical memory devices, magnetic memory devices, or solid-state memory devices, for storing programs and routines executed by processor(s) 106 to carry out various functionalities disclosed herein. Memory 104 may include any desired type of volatile and/or non-volatile memory such as, for example, static random access memory (SRAM), dynamic random access memory (DRAM), flash memory, read-only memory (ROM), and/or the like.

Processor(s) 106 and other processors referred to herein may be any suitable processor, processing unit, or microprocessor. For example, processor(s) 106 may be a multiprocessor system, and thus, may include one or more additional processors that are identical or similar to each other and that are communicatively coupled via an interconnection bus. Processor(s) 106 may be single core or multi-core, and the programs executed thereon may be configured for parallel or distributed processing. In some embodiments, processor(s) 106 may optionally include individual components that are distributed throughout two or more devices, which may be remotely located and/or configured for coordinated processing. In some examples, one or more aspects of processor(s) 106 may be virtualized and executed by remotely-accessible networked computing devices configured in a cloud computing platform.

Vehicle computing system 102 may include or otherwise be coupled to an infotainment system 108. The infotainment system 108 may include one or more components 114, including software components such as applications and software programs, display devices, and the like. The infotainment system 108 may be configured to display various elements, including applications, alerts, pop-ups, and the like for which the user (e.g., the driver and/or passenger) may interact with. The infotainment system 108 may thus be configured to display information for entertainment, for vehicle operations, and the like. In some examples, the infotainment system 108 may be configured to display such information on a display device 116, which may be communicatively coupled to or otherwise configured as a part of the infotainment system 108.

The infotainment system 108 may include software 110 that may be stored in non-transitory memory, such as non-transitory memory 104, and may comprise instructions for executing programs, algorithms, and the like in order to control, manage, and respond to the components 114 of the infotainment system 108. The software 110 as stored in memory may be currently uploaded or downloaded version of the software (e.g., operating software) for each device.

The software 110 may comprise firmware, operating software, applications, services, and/or vehicle configuration/infotainment system configuration data. The software 110 may be updatable for each device. For example, a software installer 112 may be included in the infotainment system 108. The software installer 112 may be configured to install a different, often newer version of the software, in some examples for each device. In some examples, software updates may be installed specific to a particular one of the one or more components 114. In other example, software updates may be installed for more than one, in some examples all, of the one or more components 114. The newly installed software may replace an existing software as the software 110 that is stored in memory. The infotainment system 108 may be configured with various methods for installing software. For example, the infotainment system 108 may be configured for direct installation, whereby a source of the new operating software is connected via a dedicated data cable (e.g., a universal serial bus (USB) cable) or other type of data channel. Additionally or alternatively, the infotainment system 108 may be configured for remote installation, for example via wireless communication such as via Wi-Fi communication, vehicle-to-everything (V2X) communication, cellular data communication, or other type of wireless communication. Over-the-air (OTA) technology, such as the techniques for remote installation as herein referenced, may allow for remote delivery of software updates, including for example bug fixes, security patches, and new features, to vehicles.

The vehicle computing system 102 may receive the software update, for example a custom infotainment system software update package, from an infotainment analytics system 118. The infotainment analytics system 118 may be configured to ingest data from the infotainment system 108 and generate a custom software update package for the infotainment system 108.

For example, the infotainment analytics system 118 may comprise a data collection module 120, an analytics rules engine 122, a machine learning (ML) model 124, and a software update package generator 126. The data collection module 120, the analytics rules engine 122, the ML model 124, and the software update package generator 126 may all be stored in memory and may comprise instructions therein that are executable by a processor. In some examples, the infotainment analytics system 118 may include, while not explicitly shown in FIG. 1, its own processor(s) and non-transitory memory. The processor(s) of the infotainment analytics system 118 may be similar to the processor(s) 106 and the memory of the infotainment analytics system 118 may be similar to the non-transitory memory 104, in some examples.

The data collection module 120 may store instructions for collecting data from each of the one or more components 114 of the infotainment system 108. For example, the data collection module 120 may enable collection of, for each component, logging time of usage of a particular application based on user interaction with the display device 116 of the infotainment system 108, the number of screen clicks to the display device 116, user-reported issues from specific applications (e.g., from a general population or from the specific user of the vehicle system 101), number of times an application is used, and/or abnormal computer processing unit (CPU) or memory usage of applications. A duration from a most recent previous update may also be obtained for each component. The data collection module 120 may additionally store the collected data in a database 128 that is communicatively and/or operably coupled to the infotainment analytics system 118.

The analytics rules engine 122 may store instructions for ingesting the collected data, from the data collection module 120 and/or from the database 128. For example, generation of a custom software update package for the infotainment system 108 may be requested at specified intervals, for example once per day, once every 12 hours, or other interval. Data may be retrieved directly from the data collection module 120 when the data is collected near the time of the software update generation request. Data may be retrieved from the database 128 when the data is collected before the time of the software update generation request.

The analytics rules engine 122 may store instructions for processing the ingested collected data to determine one or more feature vectors. The one or more feature vectors may comprise: various criticality factors, which may measure how critical an application is for a user on a numerical scale; feedback from the user, which may include the number of feedback reports; screen usage, which may measure the amount an application is used by number of clicks to the display device; usage time, which may measure the time an application is used; and/or Original Equipment Manufacturer (OEM)-specific data. The OEM-specific data may include infotainment system software updates that are directly indicated per OEM protocol. In some embodiments, criticality factors may be provided for each software component (e.g., application) of the specific infotainment system. For some embodiments, criticality factors may be provided for each potential software update (e.g., "commit"). Further, the one or more feature vectors may indicate whether an application or other component is due for update based on the duration since its previous update being greater than a predefined threshold.

The ML model 124 may be or otherwise store a K-means clustering algorithm configured to ingest the one or more feature vectors from the analytics rules engine and predict, based thereon, optimal update schedules. For example, the K-means clustering algorithm may be configured to group and filter the commits and/or set of commits for a particular software component (e.g., application) which may then be outputted to the software update package generator 126 for delta package generation. Examples of usage of K-means clustering for identifying which applications demand software update and which applications do not, based on feature vectors therefor, is described in greater detail with respect to FIGS.

7A-7B.

The optimal update schedules, based on the one or more feature vectors, may thus indicate which applications or other components may benefit from updates. In this way, the ML model 124 may provide results to the software update package generator 126 to generate a specific build which is customized and curated for improved performance for the specific infotainment system.

The software update package generator 126 may store instructions for generating a custom software update package for the infotainment system 108 based on the output from the ML model 124. For example, the software update package generator 126 may generate a software update package that includes software updates for a subset of the one or more components 114 based on the optimal update schedules therefor. In some examples, the software update package generator 126 may be or otherwise store a Jenkins build system and a delta package generator. The Jenkins build system may generate a customized build based on the ML model output and the delta package generator may create a package of software updates dedicated to the infotainment system 108 based on the build from the Jenkins build system. In some embodiments, one or more revisions of updated software (e.g., commits) may be available for a given component, and the one or more available revisions may also correspond with various qualitative parameters (such as a criticality parameter). In such embodiments, the delta software update for each component might not incorporate all available revisions (or the latest available revision), and may instead incorporate a subset of available revisions (or an earlier available revision). For example, a criticality parameter used to select the delta software updates may relate to the various factors of the feature vector, including the criticality factor.

The infotainment analytics system 118 may be communicatively coupled to the vehicle computing system 102, for example via a wired or wireless connection. The generated custom software update package may thus be transmitted back to the vehicle computing system 102, and thus to the software installer 112, to then be installed on the infotainment system 108.

While only one vehicle system is shown in FIG. 1 in communication with the infotainment analytics system 118, it should be understood that in some examples, multiple vehicles may be in communication with the same infotainment analytics system 118. In such examples, the infotainment analytics system 118 may obtain data from multiple vehicles (e.g., multiple different infotainment systems of vehicles) at the same time and may process data from each infotainment system separately. In other examples, the infotainment analytics system 118 may be a distributed system such that each vehicle infotainment system is in communication with a specific portion of the distributed system (e.g., is in communication with their own analytics system).

FIG. 2 shows an example partial view of an interior of a cabin 200 of a vehicle 202, in which a driver and/or one or more passengers may be seated. Vehicle 202 may be a non-limiting example of the vehicle of vehicle system 101 shown by FIG. 1 and described above.

Vehicle 202 of FIG. 2 may be a motor vehicle including drive wheels (not shown) and a power source 204 configured to provide torque to the drive wheels, such as an internal combustion engine and/or battery. In examples in which the power source 204 includes an internal combustion engine, the internal combustion engine may include one or more combustion chambers which may receive intake air via an intake passage and exhaust combustion gases via an exhaust passage. Vehicle 202 may be a road automobile, among other types of vehicles. In some examples, vehicle 202 may include a hybrid propulsion system including an energy conversion device operable to absorb energy from vehicle motion and/or the engine and convert the absorbed energy to an energy form suitable for storage by an energy storage device. Vehicle 202 may be a fully electric vehicle in some examples, incorporating fuel cells, solar energy capturing elements, and/or other energy storage systems for powering the vehicle.

As shown, the vehicle 202 may include an instrument panel 206 with various displays and controls accessible to a human driver (also referred to as the user and/or occupant) of vehicle 202. For example, instrument panel 206 may include a touch screen 208 of an in-vehicle computing system (e.g., vehicle computing system 102 of FIG. 1) and an instrument cluster 210. Touch screen 208 may receive user input to the in-vehicle computing system for controlling visual display output, user preferences, control parameter selection, and so on. While the example system shown in FIG. 2 includes controls that may be performed via a user interface of the in-vehicle computing system, such as touch screen 208, without a separate control panel, in other embodiments, the vehicle may include additional control panels. In some embodiments, one or more hardware elements of in-vehicle computing system 209, such as touch screen 208 of an infotainment system, a display screen 211 (e.g. display device 116), various control dials, knobs and buttons, memory, processor(s), and any interface elements (e.g., connectors or ports) may form an integrated head unit that is installed in instrument panel 206 of the vehicle. The head unit may be fixedly or removably attached in instrument panel 206. In additional or alternative embodiments, one or more hardware elements of in-vehicle computing system 209 may be modular and may be installed in multiple locations of the vehicle.

During operation of vehicle 202, the in-vehicle computing system may be configured to receive electronic signals from the various sensors of the vehicle 202, in some examples. Additionally, the in-vehicle computing system may be configured to update its software and install new software configurations. As previously described, the in-vehicle computing system may be configured to establish communication with an OTA client integrated charging station and receive software updates from the charging station. As an example, the charging station may determine vehicle specifics of the vehicle 202 and then determine, via communication with an OEM system, whether updated software is available for the vehicle 202. If a software update is available, the charging station may prompt the vehicle 202 to display a message on display screen 211 indicating software update availability for which the user may input a response indicating a desire to proceed with installing the software update.

FIG. 3 shows a block diagram of an in-vehicle computing system 209 integrated inside vehicle 202, where in-vehicle computing system 209 may be a non-limiting example of vehicle computing system 102 of vehicle system 101 of FIG. 1. In-vehicle computing system 209 may be referred to herein as a controller and/or electronic controller in some examples. In-vehicle computing system 209 may perform one or more of the methods described herein in some embodiments. In-vehicle computing system 209 may include, or be coupled to, various vehicle systems, sub-systems, hardware components, as well as software applications and systems that are integrated in, or integratable into, vehicle 202.

In-vehicle computing system 209 may include one or more processors including an operating system processor 314 and an interface processor 320. Operating system processor 314 may execute an operating system on in-vehicle computing system 209, and control input/output, display, and other operations of in-vehicle computing system 209. Interface processor 320 may interface with a vehicle control system 330 via an inter-vehicle system communication module 322.

Inter-vehicle system communication module 322 may output data to one or more other vehicle systems 331 and/or one or more other vehicle control elements 361, while also receiving data input from other vehicle systems 331 and other vehicle control elements 361, e.g., by way of vehicle control system 330. When outputting data, inter-vehicle system communication module 322 may provide a signal via an in-vehicle communication network corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as GPS sensors, and so on), digital signals propagated through vehicle data networks (such as an engine controller area network (CAN) bus through which engine related information may be communicated, a climate control CAN bus through which climate control related information may be communicated, and a multimedia data network through which multimedia data is communicated between multimedia components in the vehicle), and so on. For example, in-vehicle computing system 209 may retrieve from the engine CAN bus the current speed of the vehicle estimated by the wheel sensors, a power state of the vehicle via a battery and/or power distribution system of the vehicle, an ignition state of the vehicle, a condition of one or more air bags of the vehicle, a condition of hazard lights of the vehicle, a condition of the power source 204 (shown by FIG. 2) of the vehicle, and so on. In addition, other interfacing means such as Ethernet may be used as well without departing from the scope of this disclosure.

A storage device 308 may be included in in-vehicle computing system 209 to store data such as instructions executable by operating system processor 314 and/or interface processor 320 in non-volatile form. Storage device 308 may store application data to enable in-vehicle computing system 209 to run an application for connecting to a cloud-based server and/or collecting information for transmission to the cloud-based server. The application may retrieve information gathered by vehicle systems/sensors, input devices (e.g., a user interface 318), data stored in one or more storage devices, such as a volatile memory 319A or a non-volatile memory 319B, devices in communication with the in-vehicle computing system, and so on. In-vehicle computing system 209 may further include a volatile memory 319A. Volatile memory 319A may be random access memory (RAM). Non-transitory storage devices, such as non-volatile storage device 308 and/or non-volatile memory 319B (e.g., non-transitory memory), may store instructions and/or code that, when executed by a processor (e.g., operating system processor 314 and/or interface processor 320), controls in-vehicle computing system 209 to perform one or more of the actions described in the disclosure.

A microphone 302 may be included in in-vehicle computing system 209 to receive voice commands from a user, to measure ambient noise in the vehicle, and so on. A speech processing unit 304 may process voice commands, such as the voice commands received from microphone 302. In some embodiments, in-vehicle computing system 209 may also be able to receive voice commands and sample ambient vehicle noise using a microphone included in an audio system 332 of the vehicle.

One or more additional sensors may be included in a sensor subsystem 310 of in-vehicle computing system 209. For example, sensor subsystem 310 may include a camera, such as a rear view camera for assisting a user in parking the vehicle and/or a cabin camera for identifying a user (e.g., using facial recognition and/or user gestures). Sensor subsystem 310 of in-vehicle computing system 209 may communicate with and receive inputs from various vehicle sensors and may further receive user inputs. For example, the inputs received by sensor subsystem 310 may include transmission gear position, transmission clutch position, gas pedal input, brake input, transmission selector position, vehicle speed, engine speed, mass airflow through the engine, ambient temperature, intake air temperature, and so on, as well as inputs from climate control system sensors (such as heat transfer fluid temperature, antifreeze temperature, fan speed, passenger compartment temperature, desired passenger compartment temperature, ambient humidity, and so on), an audio sensor detecting voice commands issued by a user, a fob sensor receiving commands from and optionally tracking the geographic location/proximity of a fob of the vehicle, and so on.

While certain vehicle system sensors may communicate with sensor subsystem 310 alone, other sensors may communicate with both sensor subsystem 310 and vehicle control system 330, or may communicate with sensor subsystem 310 indirectly via vehicle control system 330. A navigation subsystem 311 of in-vehicle computing system 209 may generate, transmit, receive, and/or process navigation information such as location information (e.g., via a GPS sensor and/or other sensors from sensor subsystem 310), route guidance, traffic information, point-of-interest (POI) identification, and/or provide other navigational services for the driver.

A communications system 312 of in-vehicle computing system 209 may be coupleable to and/or communicate with one or more external devices 250 located external to vehicle 202. The communications system 312 may be included as part of or otherwise coupled to the one or more vehicle computing systems described with respect to FIG. 1. The communications system is in electronic communication with the electronic controller 212 of the vehicle 202 and may be commanded by the electronic controller 212 to establish communication connections and generate and transmit communications, similar to the examples described above. As one example, the electronic controller 212 may command the communications system 312 to establish communication with one or more external devices 250. The external devices 250 may include other vehicles, fuel providers (e.g., charging stations), RSUs arranged along roadways, and so on via one or more types of communication, including wired communication and/or OTA programming such as Wi-Fi, cellular data, and V2X. In some examples, the communications system 312 may communicate wirelessly with the external devices 250 via a communication module.

Vehicle control system 330 may include controls for controlling aspects of various vehicle systems 331 involved in different in-vehicle functions. These may include, for example, controlling aspects of vehicle audio system 332, aspects of a climate control system 334, aspects of a telecommunication system 336, and so on. The vehicle control system 330 may operate based on stored operating system software, such as the operating software 110 of FIG. 1.

Vehicle control system 330 may also include controls for adjusting the settings of various vehicle control elements 361 (or vehicle controls, or vehicle system control elements) related to the engine and/or auxiliary elements within the cabin of the vehicle, such as one or more steering wheel controls 362 (e.g., steering wheel-mounted audio system controls, cruise controls, windshield wiper controls, headlight controls, turn signal controls, and so on), instrument panel controls, microphone(s), accelerator/brake/clutch pedals, a gear shift, door/window controls positioned in a driver or passenger door, seat controls, cabin light controls, audio system controls, cabin temperature controls, and so on. Vehicle control elements 361 may also include internal engine and vehicle operation controls (e.g., engine controller module, actuators, valves, and so on) that are configured to receive instructions via the CAN bus of the vehicle to change operation of one or more of the engine, exhaust system, transmission, and/or other vehicle system.

In-vehicle computing system 209 may further include one or more antennas 306. The in-vehicle computing system may obtain broadband wireless internet access via antennas 306, and may further receive broadcast signals such as radio, television, weather, traffic, and the like. In some examples, one or more antennas may be included with the communications system 312 and may be configured to receive communications from vehicles or other external entities external to the vehicle 202, including charging stations. In-vehicle computing system 209 may receive positioning signals such as GPS signals via antennas 306. The in-vehicle computing system may also receive wireless commands via radio frequency (RF) such as via antennas 306 or via infrared or other means through appropriate receiving devices. In some embodiments, antenna 306 may be included as part of audio system 332 or telecommunication system 336. Additionally, antenna 306 may provide AM/FM radio signals to external devices 250, in some examples.

The vehicle 202 further includes one or more transmitters 338. In some examples, one or more of the transmitters 338 may be integrated together with one or more of the antennas 306 to form one or more transceivers configured to generate and transmit OTA communications, and receive and process OTA communications, through communications system 312.

One or more elements of in-vehicle computing system 209 may be controlled by a user via user interface 318. User interface 318 may include a graphical user interface presented on a touch screen, such as touch screen 208 and/or display screen 211 of FIG. 2, and/or user-actuated buttons, switches, knobs, dials, sliders, and so on. For example, user-actuated elements may include steering wheel controls, door and/or window controls, instrument panel controls, audio system settings, climate control system settings, and the like. A user may also interact with one or more applications of in-vehicle computing system 209 via user interface 318. In addition to receiving a user's vehicle setting preferences on user interface 318, vehicle settings selected by in-vehicle control system 330 may be displayed to a user on user interface 318. Notifications and other messages (e.g., received messages), as well as navigational assistance, may be displayed to the user on a display of the user interface. User preferences/information and/or responses to presented messages may be performed via user input to the user interface.

Although the electronic controller 212 is shown including the operating system processor 314, memory 319A, memory 319B, and so on, in some embodiments the electronic controller 212 may include a different number and/or configuration of components. For example, the electronic controller 212 may additionally be integrated with the one or more antennas 306, the one or more transmitters 338, and so on.

Turning now to FIG. 4, a flowchart illustrating a method 400 for generating a custom infotainment system software update package for a specific infotainment system is shown. The method 400 may be executed by one or more processors of an infotainment analytics system (e.g., infotainment analytics system 118) according to instructions stored in memory thereof. The infotainment analytics system may be communicatively coupled to the specific infotainment system of a vehicle, for example via wired or wireless connections.

At 402, method 400 includes obtaining data from one or more components of the infotainment system. For example, the infotainment system may comprise one or more software components, such as applications, software programs, and/or system components, as well as display devices (e.g., a display screen), input devices (e.g., touch screens, knobs, dials, etc.), and the like. The applications may be downloaded or otherwise stored in memory of the infotainment system. The applications may include entertainment applications (e.g., music applications, streaming applications, Carplay, etc.), navigation applications, weather applications, vehicle operation applications, camera applications (e.g., a back-up camera) and the like. The applications may be accessed via user inputs, e.g., via touches or clicks to the touch screen, via dial inputs moving a cursor, automatically based on vehicle state operation (e.g., the back-up camera may be accessed when the vehicle is put in reverse), and the like. The applications may record data of how many inputs are made having to do with the application (e.g., how many times the application is opened, clicks when the application is open, and the like) as well as data of usage time of the application.

As such, the data obtained from each of the one or more components may comprise logging time of usage of a particular application based on user interaction with the display device of the infotainment system (e.g., usage time obtained as a number of seconds), the number of screen clicks to the display device, user-reported issues from specific applications (e.g., from a general population or from the specific user of the vehicle system), number of times an application is used, and/or abnormal CPU or memory usage of applications. Further, a duration since a most recent previous software update may also be included in the data obtained from each of the one or more components.

In some examples, the data that is obtained may be obtained in an encrypted form and then decrypted or in a cryptographically signed form, or the data may be encrypted or cryptographically signed once it is obtained. This may reduce any unwanted modifications to the data.

The data of the various applications may be obtained in response to a software update request, in some examples. In other examples, the data may be obtained periodically. For example, the data may be obtained once every day, once per week, or the like. In this way, data may be offloaded from the applications/infotainment unit and then used when desired for generating custom software updates, which may reduce the processing power and time needed to obtain the data when the software update is requested.

In some examples, a threshold amount of available data may be met in order for the data to be considered in generating the software update package. For example, a newly downloaded application may not have enough data to inform user usage and feedback. In such an example, that application may be skipped for the current software update package and then considered for whether or not to include software updates for it in a subsequent iteration of the method 400.

At 404, method 400 includes determining one or more feature vectors based on the obtained data. The one or more feature vectors may include a criticality factor, feedback from the user, screen usage, usage time, and OEM-specific data. As described with respect to FIG. 1, the criticality factor may indicate how critical an application is for a user. The feedback from the user may include the number of feedback reports provided to the infotainment system by the user. The screen usage may indicate the amount an application is used by number of clicks to the display device. Usage time may indicate the amount of time an application is used. The OEM-specific data may include infotainment system software updates that are directly indicated per OEM protocol.

At 406, method 400 includes determining a subset of the one or more software components that are to be updated (e.g., components for which software updates are to be generated) based on the one or more feature vectors. For example, an optimal update schedule may be determined that indicates which of the software components should be updated. In some examples, determining optimal update schedules may include deploying an ML algorithm, as noted at 408. The ML algorithm may be a K-means clustering algorithm, in some examples. For example, the K-means clustering algorithm may be configured to group and filter the commits and/or set of commits for a particular software component (e.g., application) which may then be outputted to the software update package generator 126 for delta package generation.

As an example, a feature vector for the particular software component may comprise a plurality of features (e.g., usage time, criticality, etc. as described herein). The ML algorithm may ingest the one or more feature vectors and may output a predicted optimal update schedule for the one or more software components based thereon. As an example, the one or more feature vectors may indicate high usage for a first application, low usage for a second application, and an OEM requested update for a third application. The ML algorithm may ingest these feature vectors and output a schedule of software updates for the three applications noting that the first and third applications are to be updated sooner than the second application. Thus, the optimal update schedules may indicate which software components of the infotainment system may benefit from being updated at which times.

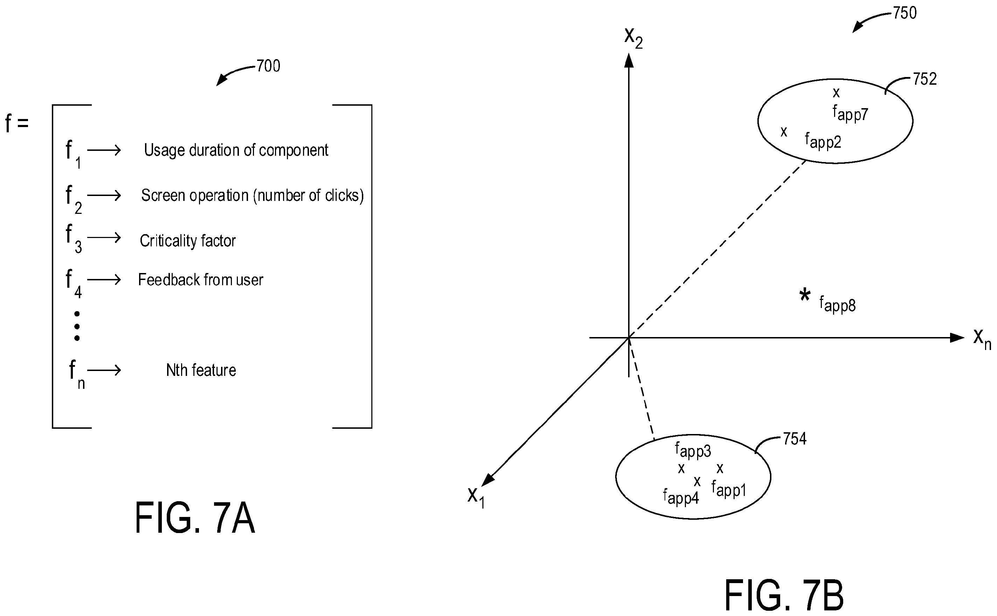

In the example where the ML algorithm is a K-means clustering algorithm, the K-means clustering algorithm may be deployed to group feature vectors for applications into one or more clusters (e.g., demands software update immediately, demands software update in future at a given timeframe, does not demand software update, etc.). The K-means clustering algorithm may then use this clustering to output the optimal update schedule/recommendation for which updates to include in an update package. An example feature vector is illustrated in FIG. 7A and an example K-means clustering diagram is illustrated in FIG. 7B, as will be described below.

Normalization or pre-processing of the feature vector may be performed, in some examples. As a non-limiting example, the criticality factor can range from 1-10, where the criticality factor is an integer set from the OEM for each application. For example, a criticality factor of 1 may be a lowest priority and a criticality factor of 10 may be a highest priority. Examples of highest priority features may include security improvements which may be set as mandatory by the OEM.

As another example, feedback from customer may be non-numerical and may be converted to an impact level by manual mapping to a scale regarding a particular feature or count of number of users who complained or raised a negative feedback about the feature. A higher number of users may indicate a higher negative feedback level, thus indicating a higher need for updates.

The number of clusters used for the K-means clustering may be configurable based on a size of the update package that is to be created. For example, a relatively smaller cluster size may be defined for a smaller package as the smaller package includes less data points. Alternatively, the number of clusters may be determined by trained domain knowledge.

When outliers are determined during the K-means cluster, outliers may be considered noise during the current software update package. Then, potentially for a next software update package, that outlier may have moved into a cluster to either be included in an update or not.

When choosing which clusters correspond to included updates and which clusters correspond to non-included updates, different mechanisms may be used. For example, to update the centroid of each cluster, the weighted score can be calculated as $f1*w1+f2*w2+...+fn*wn$, where weights can be tuned on domain knowledge or OEM preference and clusters with a max or par score can be labelled as chosen for update.

In other example, aggregated score per cluster may be calculated based on average weighted score of each data points within the cluster and a maximum or par aggregate score of the cluster is chosen for update.

In yet another examples, supervised labeling of the cluster manually based on domain knowledge may be used. For example, this label data may be trained for a few initial cycles or in test environment and this supervised data can be enhanced and used for automatic labeling of the cluster for the future cycles or in field. Alternatively, as previously discussed, predefined regions in N-dimensional feature space can be used.

At 410, method 400 includes generate a custom software update package based on the subset of software components to be updated that is outputted by the ML algorithm. For example, based on the optimal update schedules that indicate which software components are to be updated, a software update package that is customized for the infotainment system of the vehicle may be generated. In some examples, the updates may include delta updates, whereby the package may include the changes from existing software.

As a non-limiting example, a Jenkins build system may be deployed to generate the custom software update package. The custom software update package may be a delta package, as herein described. The Jenkins build system may obtain or receive a latest source code from the OEM and then builds a target version of each software to be included in the delta package. The target version may include the differences or deltas compared to a base version (e.g., a previous release, stored, or rebuilt version of the software). The Jenkins build system may then output the differences for each of the identified software to generate the delta package.

In some examples, certain software updates are included in the software update package regardless of the ML algorithm output. For example, updates that are pushed out by the OEM may not be skipped even if the corresponding application do not demand update per the ML algorithm output (e.g., based on usage, user feedback, criticality, etc.).

At 412, method 400 includes transmitting the custom software update package to a vehicle computing system of the vehicle. As noted, the infotainment analytics system may be communicatively coupled to the vehicle computing system via one or both of wired and/or wireless connections. For example, the custom software update package may be transmitted to the vehicle computing system via a USB connection. In other examples, the custom software update package may be transmitted via OTA technology (e.g., via Wi-Fi, cellular data, or the like).

While the method 400 is herein described with respect to generating a custom software update package for a single infotainment system, it should be understood that in some examples the method 400 may be executed for multiple devices at the same time. For example, data from a first device (e.g., first infotainment system) may be obtained to generate a first custom software update package at the same time that data from a second device (e.g., second infotainment system) may be obtained to generate a second custom software update package. While the first and second devices may comprise the same or similar set of software components (e.g., similar applications and/or software programs), the data thereof may be specific to the corresponding device. Thus, the first and second custom software update packages may be different based on the user specific usage patterns of the specific devices.

As a non-limiting example illustrating a single feature (e.g. usage time), for a first user, a navigation application may be used 20% of the time the user is driving, radio may be used 40% of the time, the rear view camera may be used 5% of the time, Carplay may be used 0% of the time, and Bluetooth media player may be used 1% of the time. Conversely, for a second user, the navigation application may be used 80% of the time the user is driving their vehicle, the FM radio may be used 0% of the time, the rear view camera may be used 7% of the time, Carplay may be used 0% of the time, and Bluetooth media player may be used 12% of the time. These two users have different usages and therefore different priorities for which applications get updated. For example, the first user has relatively high usage of the radio compared to the second user while the second user has relatively high usage of the navigation application compared to the first user. The method 400 described herein may thus use this data to build delta packages of software updates. The delta package built for the first user may include a delta update for the radio application but not the navigation application and the delta package built for the second user may include a delta update for the navigation application but not the radio application.

Determining a custom software update package as herein described may thus allow for building of a package of software updates for a subset of software components of a specific infotainment system based on user specific usage patterns. By including updates for the subset rather than for all software components for which updates are available, the amount of data that is to be transmitted to the vehicle computing system may be reduced. By reducing the amount of data that is transmitted, overall processing demands for the vehicle computing system may be reduced, both in retrieval of the data from the infotainment analytics system (or from a database of software updates, such as included in a OEM database) and in installing the software updates to the system.

Turning now to FIG. 5, a flowchart illustrating a method 500 for installing a custom software update package to an infotainment system is shown. The method 500 may be executed by one or more processors of a vehicle computing system (e.g., vehicle computing system 102) and/or a specific infotainment system according to instructions stored in memory thereof. The infotainment system may be communicatively coupled to an infotainment analytics system =, for example via wired or wireless connections.

At 502, method 500 includes transmitting infotainment system data to infotainment analytics system. As described above with respect to method 400, the infotainment analytics system may obtain data of one or more components of the infotainment system in order to generate a custom software update package therefor. For example, the infotainment system may comprise a plurality of components, such as applications, input devices, display devices, and the like, that overtime generate data of usage time, number of clicks, and the like. Further, a duration since last software update for each component may also be included in the data. The data may be transmitted to the infotainment analytics system upon request from the infotainment analytics system. For example, potential software updates may be determined at regular intervals, for example once per day. At each interval, the infotainment analytics system may request current data be transmitted thereto. For example, the data transmitted to the infotainment analytics system may be new data generated in an interval between a previous transmission of data and the current transmission of data. Thus, data transmitted to the infotainment analytics system may merely be new data.

At 504, method 500 includes receiving a custom software update package from the infotainment analytics system. As described with respect to method 400, the infotainment analytics system may generate the custom software update package based on the data transmitted from the infotainment system and may transmit the custom software update package back to the vehicle computing system over the wired or wireless connection.

At 506, method 500 includes determining whether silent updates are enabled for the infotainment system. When silent updates are enabled, recommended software updates, such as those included in the custom software update package, may be installed without input from the user (e.g., the driver or other user of the vehicle). If silent updates are enabled (YES at 506), method 500 proceeds to 508. If silent updates are not enabled, user input may be demanded in order to install the recommended updates. If silent updates are not enabled (NO at 506), method 500 proceeds to 512.

At 508, method 500 includes transmitting the custom software update package to the infotainment software installer. As described with respect to FIG. 1, the infotainment system may comprise a software installer configured to install new software to the infotainment system devices. The custom software update package that is received at the vehicle computing system may be sent to the software installer for installation.

At 510, method 500 includes updating the infotainment system software with the custom software update package. As described with respect to FIG. 1, the software installer of the infotainment system may be configured to install new software updates to replace existing software in the infotainment system. For example, the software that is currently stored and executed for the infotainment system may be updated with the new delta updates by the software installer.

When silent updates are not enabled, at 512, method 500 includes receiving user inputs selecting a subset of the updates of the custom software update package. For example, a notification may be displayed to the user on the display device indicating which updates are included in the custom software update package. User inputs may be applied, for example via touch inputs to the touch screen of the display device, selecting a subset of the updates of the custom software update package. For example, the user may choose to update some applications but not others. In some examples, the subset may include all of the updates in the custom package and in other examples, the subset may include less than all of the updates in the custom package.

At 514, method 500 includes transmitting the subset of updates of the custom software update package to the infotainment software installer. As described with respect to FIG. 1, the infotainment system may comprise a software installer configured to install new software to the infotainment system devices. The custom software update package that is received at the vehicle computing system may be sent to the software installer for installation.

At 516, method 500 includes updating the infotainment system software with subset of updates of the custom software update package. Any updates included in the package that are not included in the subset of updates (e.g., are not chosen to be installed) may not be installed. As described with respect to FIG. 1, the software installer of the infotainment system may be configured to install new software updates to replace existing software in the infotainment system. For example, the software that is currently stored and executed for the infotainment system may be updated with the new delta updates by the software installer.

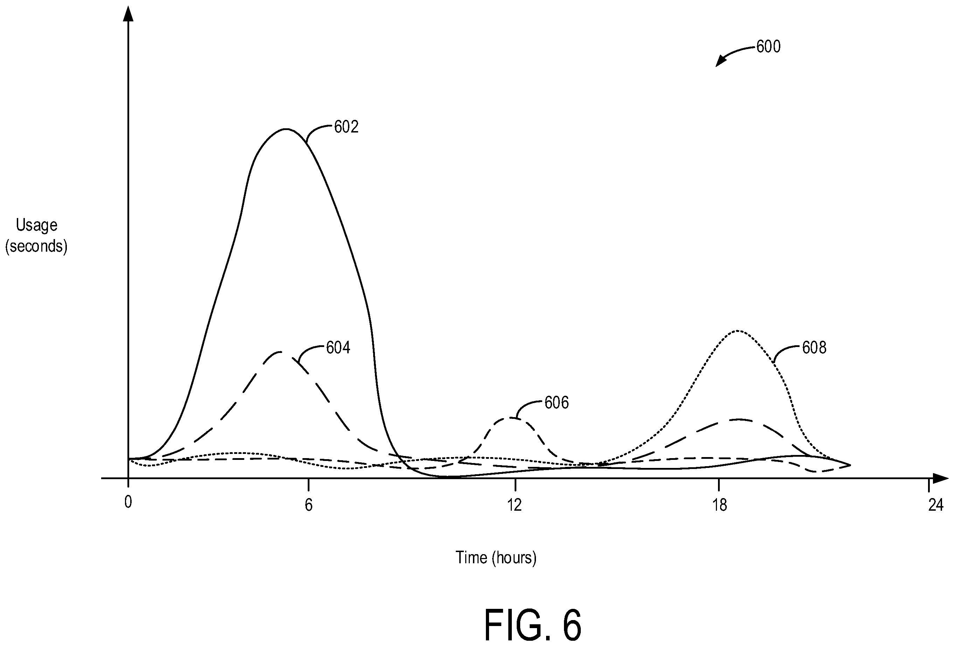

Turning now to FIG. 6, an example of a representation of a data log is shown. The representation includes a graph 600 of usage duration of a plurality of vehicle software components (e.g., applications).

The graph 600 plots usage in seconds versus time in hours, increasing from left to right. A first plot 602 indicates usage of a first application, a second plot 604 indicates usage of a second application, a third plot 606 indicates usage of a third application, and a fourth plot 608 indicates usage of a fourth application, all over the course of a day (e.g., 24 hours). In a non-limiting example, the first application may be a radio application (e.g., an FM/AM tuner application), the second application is a navigation application, the third application is a rear view camera operation, and the fourth application is a Carplay application.

Usage of the first application may peak around the 6-hour mark, with a general peak curve between hour 2 and hour 8. For example, the user may listen to the radio when driving to work. Usage of the second application may peak around the 6-hour mark and again around the 18-hour mark. For example, the user may also open their navigation app when driving to work and when driving home from work. Usage of the third application may peak around the 12-hour mark. For example, the user may open their rear view camera application when reversing out of a parking space for their lunch hour break. Usage of the fourth application may peak around the 18-hour mark. For example, the user may listen to music or a podcast or an audiobook when driving home from work via the Carplay application. The representation shown in FIG. 6 is exemplary in nature, illustrating the kinds of time-based usages that may be logged by the system and used to determine relevance to the specific user. For example, this particular user may not have any usage time for a fifth application, such as an in-vehicle gaming application, which may indicate that the fifth application is of low priority for that specific user and thus a software update may be of low demand from a usage standpoint.

Turning now to FIG. 7A, an example feature vector 700 is shown. The feature vector 700, represented by $f$ in the figure, includes a set of features from $f_1$ to $f_n$ for a given software component. As an example, the feature vector 700 includes a plurality of features. Each of the plurality of features may be a numerical value. In some examples, the features may exist in their original form as a number (e.g., usage time in seconds). In other examples, the features may be converted into a numerical value, for example by mathematical vectorization, when the original form is something other than a number (e.g., text-based user feedback). As an example, text based feedback can be mapped to a score with a scale of 1 to 10 based on different categories, such as based on application type like productivity, game, security, vehicles critical functionality. An amount of negative feedback manually /based on OEM preference or the count of number of feedback or number of issue ticket created for the particular application that are received for the application can be used. And for different data type, the numerical representations can be normalized to an appropriate scale.

First feature $f_1$ of the plurality of features is usage duration of the given software component. The usage duration may be provided based on data such as that presented in FIG. 6. Second feature $f_2$ of the plurality of features is screen operation of the software component (e.g., number of clicks within the application). Third feature $f_3$ of the plurality of features is a criticality factor. Fourth feature $f_4$ of the plurality of features is feedback from the user. Additional features may also be included in the plurality of features, as described herein.

The features $f_1$ to $f_n$ may be considered together in the feature vector for the given software component (e.g., application). The feature vector 700 (e.g., feature vector $f$) may be one of a plurality of feature vectors that are inputted into a machine learning algorithm, such as a K-means clustering algorithm, as described above, in order to determine which updates to include in a delta package for the vehicle.

FIG. 7B illustrates a K-means clustering plot 750. The K-means clustering algorithm, as described herein, groups data points (in this instance, feature vectors), into a predefined number (K) of clusters based on similarity in their feature values. When applied to determine software update schedules/which updates should be included in a delta package, the algorithm analyzes numerical attributes of features within each feature vector (e.g., usage time, number of screen clicks, criticality value, etc.) and organizes the feature vectors for applications into groups where items in the same cluster are more similar to each other than to those in other clusters. These clusters can then be interpreted to assign relative priority for software update (e.g., demands update now, demands update at subsequent update, does not demand update, etc.) for the applications.

With a plurality of feature vectors each corresponding to a software component (e.g., an application, a software program, etc.), the K-means clustering algorithm may form one or more centroids of certain labeled components, as described in equations (1):

$$C_j = Cluster(X_i) = \arg_j \min \|X_i - \mu_j\|^2 \qquad (1)$$

where $X_i$ is a data point, $\mu_j$ is the centroid of cluster $j$, $C_j$ is the set of points assigned to cluster $j$, and $\|X_i - \mu_j\|^2$ is the squared Euclidean distance between a point and its centroid.

As described above, a weighted score can be calculated to determine which clusters correspond to updates to be included and updates not to be included, as per equation (2):

$$f_1 * w_1 + f_2 * w_2 + \cdots + f_n * w_n \qquad (2)$$

where the weights (w) can be tuned based on domain knowledge, OEM preference, etc. Clusters with a maximum or par score may thus be labelled as chosen for update. Alternative methods for calculate of aggregate score may include: 1) aggregate score per cluster based on average weighted score of each data point within the cluster where the maximum or par aggregate score is chosen for update; 2) supervised labeling of clusters manually based on domain knowledge and training this label data for a few initial cycles or in a test environment, the supervised data thus can be enhanced and used for automatic labeling of the clusters for future cycles; and 3) predefined regions in N-dimensional feature space.

The distortion of the centroid may be defined by equation (3):

$$distortion = \sum_{i=1}^{m} (x_i - c_i)^2 = \sum_{j=1}^{k} \sum_{i \in Owned\,by(\mu_j)} \left(X_i - \mu_j\right)^2 \qquad (3)$$

where the variables are as described above.

The center of each of the one or more centroids may be found by minimizing the square error, in some examples. For example, the center of each centroid may be found according to equation (4):

$$\frac{\partial Distortion}{\partial \mu_j} = \frac{\partial}{\partial \mu_j} \sum_{i \in OwnedBy(\mu_j)} \left(X_i - \mu_j\right)^2 = -2 \sum_{i \in OwnedBy(\mu_j)} \left(X_i - \mu_j\right) = 0 \qquad (4)$$

$$\Rightarrow \mu_j = \frac{1}{\left|OwnedBy(\mu_j)\right|} \sum_{i \in OwnedBy(\mu_j)} X_i$$

where the variables are as described above. The centroids may thus define where in a K-means clustering plot the corresponding cluster resides, which may inform whether or not updates for applications/components within the corresponding clusters are demanded.

In the example shown in FIG. 7B, a first cluster 752 is identified within a first region and a second cluster 754 is identified within a second region. The first cluster 752 may include feature vectors for a second application $f_{app2}$ and a seventh application $f_{app7}$. The first cluster 752, and other clusters or centroids that are in the first region such as a cluster including eighth application $f_{app8}$, may be identified as applications for which updates are not demanded. The second cluster 754 may include feature vectors for a first application $f_{app1}$, a third application $f_{app3}$, and a fourth application $f_{app4}$. The second cluster 754, and other clusters or centroids that are in the second region, may be identified as applications for which updates are demanded and thus are to be included in a delta package.

The custom software update package may include software updates for a subset of the components (e.g., applications, software programs, etc.) of the infotainment system. The subset may be determined by the infotainment analytics system, as described with respect to FIG. 4, to best optimize which updates are included in the package. Thus, the technical effect of the systems and methods herein disclosed is that the updates may be specific to the infotainment system and may be configured to reduce the amount of data that is to be installed, thereby improving the efficiency of the software installer and the vehicle computing system overall. Further, the amount of time it takes to install the software updates may be reduced due to less data being included.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The methods may be performed by executing stored instructions with one or more logic devices (e.g., processors) in combination with one or more additional hardware elements, such as storage devices, memory, hardware network interfaces/antennas, switches, actuators, clock circuits, and so on. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," and so on. are used merely as labels, and are not intended to impose numerical requirements or a particular positional order on their objects. The following claims particularly point out subject matter from the above disclosure that is regarded as novel and non-obvious.

**Claims**

1.   A method for generating a custom software update package for a specific infotainment system (108), comprising:

   obtaining data from one or more software components of the specific infotainment system (402);
   determining one or more feature vectors based on the data (404);
   determining a subset of the one or more software components of the specific infotainment system that are to be updated based on the one or more feature vectors (406); and
   generating the custom software update package for the specific infotainment system based on the subset of the one or more software components (410).

2.   The method of claim 1, further comprising obtaining data from one or more display devices of the specific infotainment system (402), one or more input devices of the specific infotainment system, or both, wherein the one or more feature vectors are determined based on the data from the one or more software components as well as the data from the one or more display devices of the specific infotainment system, the one or more input devices of the specific infotainment system, or both.

3.   The method of claim 1 or 2, wherein the data obtained from the one or more software components of the specific infotainment system comprises, for each software component, at least one of: logging time of usage of each application based on user interaction with a display device of the specific infotainment system; a number of screen clicks to the display device; user-reported issues for each application; a number of times each application is used; abnormal CPU or memory usage of each application; and duration since a most recent previous update (402).

4.   The method of any preceding claim, wherein the one or more feature vectors comprise one feature vector for each of the one or more software components, where each feature vector comprises one or more of: a criticality factor of a corresponding software component; feedback from a user; screen usage in number of clicks; usage time; and OEM-specific data (404).

5.   The method of any preceding claim, wherein the subset of the one or more software components of the specific infotainment system that are to be updated based on the one or more feature vectors is determined by a machine learning algorithm (408).

6.   The method of claim 5, wherein the machine learning algorithm is a K-means clustering algorithm (408).

7.   A system (100), comprising:

   a vehicle computing system (102) comprising a plurality of software components (114); and
   a computing device communicatively coupled to the vehicle computing system, the computing device comprising one or more processors (106) configured to execute instructions stored in non-transitory memory (104) that when executed, cause the computing device to:

obtain data relating to the plurality of software components (402);
determine a feature vector for one or more of the plurality of software components based on the obtained data (404);
determine a subset of the plurality of software components that are to be updated based on the one or more determined feature vectors (406);
build a custom delta package comprising software updates for the subset of the plurality of software components that are to be updated (410); and
transmit the custom delta package to the vehicle computing system (412).

8. The system of claim 7, wherein the plurality of software components comprises one or more applications and/or software programs (402).

9. The system of claim 7 or 8, wherein, to determine the feature vector for the one or more of the plurality of software components, the one or more processors are configured to compile a plurality of features of the obtained data for a corresponding software component (404).

10. The system of claim 9, wherein the plurality of features comprises, for each software component, a criticality factor, a usage time, a number of clicks to a display screen when operating the software component, OEM requirements, driver preferences, and feedback from a user (404).

11. The system of any of claims 7 to 10, wherein to determine the subset of the plurality of software components that are to be updated based on the one or more determined feature vectors, the one or more processors are configured to (408):

input the determined feature vector into a K-means clustering algorithm;
determine, via the K-means clustering algorithm, one or more clusters of feature vectors; and
based on the one or more clusters, identify the subset of the plurality of software components that are to be updated.

12. The system of claim 11, wherein to determine the feature vector for the one or more of the plurality of software components, the one or more processors are configured to vectorize the data obtained from the plurality of software components (408).

13. The system of any of claims 7 to 12, wherein to build the custom delta package, the one or more processors are configured to deploy a Jenkins build system (410).

14. The system of any of claims 7 to 13, wherein the vehicle computing system is configured to install the custom delta package automatically (506, 508, 510).

15. The system of any of claims 7 to 14, wherein the vehicle computing system is configured to install the custom delta package in response to user input (506, 512, 514, 516).

100

VEHICLE SYSTEM 101

VEHICLE COMPUTING SYSTEM 102

NON-TRANSITORY MEMORY 104

PROCESSOR(S) 106

INFOTAINMENT SYSTEM 108

SOFTWARE 110

SOFTWARE INSTALLER 112

COMPONENT(S) 114

DISPLAY DEVICE 116

INFOTAINMENT ANALYTICS SYSTEM 118

DATA COLLECTION MODULE 120

ANALYTICS RULE ENGINE 122

MACHINE LEARNING MODEL 124

SOFTWARE UPDATE PACKAGE GENERATOR 126

128

DATABASE

FIG. 1

FIG. 2

EP 4 687 031 A1

FIG. 3

START

402

OBTAIN DATA FROM ONE OR MORE DEVICES

404

DETERMINE ONE OR MORE FEATURE VECTORS BASED ON THE DATA

406

DETERMINE SUBSET OF SOFTWARE COMPONENTS TO BE UDPATED BASED ON FEATURE VECTORS

DEPLOY ML ALGORITHM 408

410

GENERATE CUSTOM UPDATE PACKAGE FROM OPTIMAL UPDATE SCHEDULES

412

TRANSMIT CUSTOM UPDATE PACKAGE TO VEHICLE COMPUTING SYSTEM

END

400

FIG. 4

START

TRANSMIT INFOTAINMENT SYTSEM DATA
TO INFOTAINMENT ANALYTICS SYSTEM
— 502

RECEIVE CUSTOM SOFTWARE UPDATE
PACKAGE AT VEHICLE COMPUTING
SYSTEM
— 504

SILENT UPDATE
ENABLED?
— 506

NO → RECEIVE USER INPUTS SELECTING
A SUBSET OF UPDATES OF THE
CUSTOM SOFTWARE UPDATE
PACKAGE
— 512

TRANSMIT SUBSET OF UPDATES
TO INFOTAINMENT SOFTWARE
INSTALLER
— 514

UPDATE INFOTAINMENT
SOFTWARE WITH SUBSET OF
UPDATES
— 516

YES

TRANSMIT CUSTOM SOFTWARE UPDATE
PACKAGE TO INFOTAINEMENT SOFTWARE
INSTALLER
— 508

UPDATE INFOTAINMENT SOFTWARE WITH
CUSTOM SOFTWARE UPDATE PACKAGE
— 510

END

— 500

FIG. 5

FIG. 6

EP 4 687 031 A1

**FIG. 7B**

750

752

$x$
$f_{app7}$
$x$ $f_{app2}$
$x$

$*$ $f_{app8}$

$x_n$

$x_2$

$x_1$

754

$f_{app3}$
$x$ $x$ $f_{app1}$
$x$ $x$
$f_{app4}$

**FIG. 7A**

700

$$f = \begin{bmatrix} f_1 & \longrightarrow & \text{Usage duration of component} \\ f_2 & \longrightarrow & \text{Screen operation (number of clicks)} \\ f_3 & \longrightarrow & \text{Criticality factor} \\ f_4 & \longrightarrow & \text{Feedback from user} \\ \vdots & & \\ f_n & \longrightarrow & \text{Nth feature} \end{bmatrix}$$

**EUROPEAN SEARCH REPORT**

Application Number

EP 25 19 1976

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 742 285 A1 (XRSPACE CO LTD [TW]) 25 November 2020 (2020-11-25) * paragraph [0013] - paragraph [0034] * ----- | 1-15 | INV. G06F8/65 |
| A | US 2023/376600 A1 (ZHAO HAO [CN]) 23 November 2023 (2023-11-23) * paragraph [0024] - paragraph [0045] * ----- | 1-15 | |
| A | CN 117 724 743 A (BEIJING VRV SOFTWARE CO LTD) 19 March 2024 (2024-03-19) * page 1, paragraph 5 - page 5, paragraph 2 * * page 7, paragraph 1 - page 12, paragraph 4 * ----- | 1-15 | |

TECHNICAL FIELDS SEARCHED (IPC)

G06F
G06N
B60K

The present search report has been drawn up for all claims

| Place of search | Date of completion of the search | Examiner |
|---|---|---|
| Munich | 18 November 2025 | Kusnierczak, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 1976

18-11-2025

| Patent document cited in search report | Publication date | Patent family member(s) | | Publication date |
|---|---|---|---|---|
| EP 3742285 A1 | 25-11-2020 | NONE | | |
| US 2023376600 A1 | 23-11-2023 | CN | 114912121 A | 16-08-2022 |
| | | EP | 4280053 A1 | 22-11-2023 |
| | | US | 2023376600 A1 | 23-11-2023 |
| CN 117724743 A | 19-03-2024 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202441057956